# EUROPÄISCHE PATENTSCHRIFT

(11) **EP 2 311 195 B1**
(45) Veröffentlichungstag und Bekanntmachung des Hinweises auf die Patenterteilung: **11.07.2012**
(21) Anmeldenummer: 09757445.3
(22) Anmeldetag: 28.05.2009
(51) Int. Cl.: H04B 1/16

(54) **ANORDNUNG UND VERFAHREN ZUR REDUZIERUNG DES STROMVERBRAUCHS EINER STEUERSCHALTUNG**
APPARATUS AND METHOD FOR REDUCING THE CURRENT CONSUMPTION OF A CONTROL CIRCUIT
AGENCEMENT ET PROCÉDÉ DE RÉDUCTION DE LA CONSOMMATION ÉLECTRIQUE D'UN CIRCUIT DE COMMANDE

(30) Priorität: 05.06.2008 DE 102008026845
(43) Veröffentlichungstag der Anmeldung: 20.04.2011
(73) Patentinhaber: Continental Automotive GmbH, 30165 Hannover (DE)
(72) Erfinder: EMMERLING, Ulrich, 93309 Kelheim (DE); HOSTMANN, Daniel, 93059 Regensburg (DE); SCHUSTER, Rupert, 85296 Rohrbach (DE); WAGNER, Roland, 34128 Kassel (DE); BRIESE, Stephanie, 93049 Regensburg (DE); HUSCHENBETT, Matthias, 93059 Regensburg (DE)
(86) Internationale Anmeldenummer: PCT/EP2009/056549
(87) Internationale Veröffentlichungsnummer: WO 2009/147063

(56) Entgegenhaltungen:
- US-B1- 6 801 134

## Beschreibung

Die Erfindung betrifft eine Anordnung und ein Verfahren zur Reduzierung des Stromverbrauchs einer Steuerschaltung und im Besonderen eine Anordnung und ein Verfahren zur Reduzierung des Stromverbrauchs beim Betrieb der Anordnung im Polling-Betrieb.

In einer Vielzahl von Fahrzeugen, insbesondere Kraftfahrzeugen, wird bereits heute eine Vielzahl von Funktionen über mobile, von Benutzern mitgeführte Sende- und Empfangseinheiten ausgelöst oder gesteuert. Üblicherweise wird dafür eine Funkstrecke in lizenzfreien Frequenzbändern für die hochfrequente Übertragung vom und zum Kraftfahrzeug genutzt. Für den Fahrzeugzugang und Motorstart sind dies zum Beispiel so genannte PASE-Systeme. PASE steht dabei für PAsive Start and Entry und beschreibt eine schlüsselloses Zugangs- und Start-system. PASE-Systeme sind inzwischen die Standardlösung nicht nur für komfortables Ver- und Entriegeln eines Fahrzeuges, sondern auch für weitere Komfortfunktionen, die neben dem Ver- und Entriegeln der Türen und des Kofferraums auch zum Aktivieren und Deaktivieren der Wegfahrsperre verwendet werden.

Bei diesem schlüssellosen Fahrzeugzugangssystem muss der Fahrer lediglich einen Identifikationsgeber (mobile Sende- und Empfangseinheit) mit sich führen. Quasistationäre, im oder am Fahrzeug angebrachte Sende- und Empfangseinheiten suchen dabei durch Aussenden von Signalen über entsprechende im oder am Fahrzeug angeordnete Sendeantennen nach dem Vorhandensein von mobilen Sende- und Empfangseinheiten. Solche von einem Benutzer mitgeführte mobile Sende- und Empfangseinheiten senden als Reaktion auf ein Sendesignal sofort ein Antwortsignal an die quasistationäre Sende- und Empfangseinheit zurück, wenn sich der Benutzer in einem der Wirkungsbereiche der Sendeantennen der quasistationären Sende- und Empfangseinheit befindet. Verlässt der Benutzer die Wirkungsbereiche wird von der mobilen Sende- und Empfangseinheit kein Antwortsignal der mobilen Sende- und Empfangseinheit mehr empfangen und als Reaktion darauf wird zum Beispiel eine automatische Verriegelung der Fahrzeugtüren des Fahrzeugs ausgelöst. Sendesignale werden dabei über entsprechende Sendeantennen üblicherweise im 100kHz-Bereich (wie etwa 125 kHz) ausgesendet. Entsprechende Antwortsignale von der mobilen Sende- und Empfangseinheit werden über eine Empfangsantenne beispielsweise im MHz-Bereich (wie etwa 433 MHz) empfangen.

Nach dem Stand der Technik sind quasistationäre Sende- und Empfangseinheiten dabei üblicherweise mit einem Mikrocontroller verbunden der die Aufgabe hat, das Aussenden von Sendesignalen zu steuern. Nachteilig wirkt sich dabei der Stromverbrauch bei quasistationären Sende- und Empfangseinheiten und Mikrocontrollern aus, wenn die Energieversorgung der Anordnung über längere Zeiträume ausschließlich durch die Batterie eines Fahrzeugs erfolgt. Dies ist zum Beispiel dann der Fall, wenn ein Fahrzeug über einen längeren Zeitraum geparkt wird und die Anordnung fortlaufend nach einer mobilen Sende- und Empfangseinheit sucht.

Üblicherweise steuert ein Mikrocontroller eine Sende- und Empfangseinheit zyklisch in vorgegebenen Zeitabständen an, um ein Aussenden von Sendesignalen durch die quasistationäre Sende- und Empfangseinheit wiederholt auszulösen. Die quasistationäre Sende- und Empfangseinheit horcht im Anschluss an jedes Aussenden eines Sendesignals auf ein Antwortsignal einer mobilen Sende- und Empfangseinheit. Ein solcher Betriebszustand wird dabei häufig auch als Polling-Betrieb bezeichnet.

Dabei arbeitet der Mikrocontroller üblicherweise in zwei verschiedenen Betriebszuständen, um den Polling-Betrieb dauerhaft aufrecht zu erhalten. In einem ersten Fall ist der Mikrocontroller fortlaufend aktiv, wird jedoch optional in einem ersten stromreduzierten Modus betrieben, um Energie beim Betrieb der Anordnung einzusparen. In einem zweiten Fall wird der Mikrocontroller zum Ansteuern der quasistationären Sende- und Empfangseinheit durch interne oder externe Taktgeber zyklisch aus einem Ruhe-Modus "aufgeweckt". Auch hier ist das Ziel, Energie beim Betrieb der Anordnung einzusparen gegenüber einem Zustand, in dem ein Mikrocontroller fortlaufend aktiv ist.

Dennoch wirkt sich der Energiebedarf beziehungsweise der Stromverbrauch dieses Mikrocontrollers nachteilig auf den gesamten Stromverbrauch der Anordnung aus. Darüber hinaus ist es auch in Bezug auf die Sende- und Empfangseinheit selbst wünschenswert, deren Stromverbrauch im Polling-Betrieb zu reduzieren.

Die Druckschrift US 6 801 134 B1 offenbart ein PASE-System, bei dem eine fahrzeugseitige Einrichtung ein Anfragesignal an ein tragbares Sende-Empfangs-Gerät sendet, um dies dazu zu veranlassen, ein Antwortsignal zurückzusenden. Mit diesem Antwortsignal soll dann ein Autorisierungsprozess eingeleitet werden, durch den sich das tragbare Sende-Empfangs-Gerät gegenüber dem Fahrzeug identifiziert. Dabei sendet die fahrzeugseitige Einrichtung das Anfragesignal dann aus, wenn ein Benutzer den Türgriff betätigt.

Aufgabe der vorliegenden Erfindung ist es daher, eine Anordnung und ein Verfahren zur Zugangskontrolle für ein Fahrzeug anzugeben, bei denen der Stromverbrauch im Polling-Betrieb deutlich reduziert wird.

Die Aufgabe wird gelöst durch eine Anordnung gemäß Anspruch 1 und ein Verfahren gemäß Anspruch 10. Ausgestaltungen und Weiterbildungen des Erfindungsgedankens sind Gegenstand von Unteransprüchen.

Die Aufgabe wird insbesondere gelöst durch eine im oder am Fahrzeug angeordnete Sende- und Empfangseinheit, die elektrisch mit einem Mikrocontroller verbunden ist. Der Mikrocontroller ist ausgebildet, Steuersignale oder Konfigurationsdaten elektrisch an die Sende- und Empfangseinheit zu übermitteln, um auf diese Weise den Betrieb der Sende- und Empfangseinheit zu steuern. Die Sende- und Empfangseinheit ist dabei ausgebildet, in einem ersten Betriebszustand unter Steuerung der Steuersignale des Mikrocontrollers Sendesignale über die Sendeantennen auszusenden.

Der Mikrocontroller ist weiterhin ausgebildet, die Sende- und Empfangseinheit als Reaktion auf ein bestimmtes Ereignis durch einmalige Übertragung von entsprechenden Konfigurationsdaten in einen zweiten Betriebszustand zu versetzen. Die Sende- und Empfangseinheit ist ausgebildet, in diesem zweiten Betriebszustand ohne weitere nachfolgende Steuersignale oder Konfigurationsdaten des Mikrocontrollers selbständig wiederholt in fest vorgegebenen Zeitabständen Sendesignale über die Sendeantennen auszusenden. Der Mikrocontroller ist weiterhin ausgebildet, sofort in einen stromsparenden oder stromlosen Zustand zu wechseln, nachdem er die Sende- und Empfangseinheit in den zweiten Betriebszustand versetzt hat.

Die Sende- und Empfangseinheit ist weiterhin dazu ausgebildet, im zweiten Betriebszustand in stromsparende Modulationsarten für die Sendesignale und/oder auf Antennenschwingkreise mit niedrigerem Stromverbrauch umzuschalten.

Die Aufgabe wird weiterhin insbesondere gelöst durch ein Verfahren zur Reduzierung des Stromverbrauchs einer Steuerschaltung, bei dem mindestens eine elektrisch mit einem Mikrocontroller verbundene Sende- und Empfangseinheit über mindestens eine Sendeantenne drahtlos Signale sendet, wobei das Verfahren folgende Schritte umfasst: Übermitteln, durch den Mikrocontroller in einem aktiven Betriebszustand von diesem, von Steuersignalen an die Sende- und Empfangseinheit zu deren Steuerung oder von Konfigurationsdaten für deren Betrieb, Empfangen und Verarbeiten der übermittelten Steuersignale oder Konfigurationsdaten durch die Sende- und Empfangseinheit, Aussenden, unter Steuerung der Steuersignale des Mikrocontrollers, von Sendesignalen über die Sendeantennen durch die Sende- und Empfangseinheit in einem ersten Betriebszustand, Versetzen der Sende- und Empfangseinheit in einen zweiten Betriebszustand durch einmalige Übertragung von entsprechenden Konfigurationsdaten durch den Mikrocontroller als Reaktion auf ein erstes bestimmtes Ereignis, im zweiten Betriebszustand selbständiges wiederholtes Aussenden von Sendesignalen in fest vorgegebenen Zeitabständen über die Sendeantennen durch die Sende- und Empfangseinheit ohne weitere nachfolgende Steuersignale oder Konfigurationsdaten des Mikrocontrollers, sofortiges Wechseln des Mikrocontrollers in einen stromsparenden oder stromlosen inaktiven Betriebszustand, nachdem dieser die Sende- und Empfangseinheit in den zweiten Betriebszustand versetzt hat, Wechseln der Sende- und Empfangseinheit, als Reaktion auf ein zweites bestimmtes Ereignis, in den ersten Betriebszustand und Erzeugen eines Zustandswechselsignals für den Mikrocontroller durch diese, und Wechseln des Mikrocontrollers vom inaktiven Betriebszustand in den aktiven Betriebszustand als Reaktion auf das Zustandswechselsignal der Sende- und Empfangseinheit.

Die Erfindung wird nachfolgend anhand der in den Figuren der Zeichnungen dargestellten Ausführungsbeispiele näher erläutert, wobei gleiche Elemente mit gleichen Bezugszeichen versehen sind. Es zeigt:
- Figur 1: in einem Blockschaltbild eine Ausführungsform einer quasistationären Sende- und Empfangseinheit mit elektrisch damit verbundenem Mikrocontroller;
- Figur 2: in einem Blockschaltbild die quasistationäre Sende- und Empfangseinheit mit Antennenausgängen, die Antennenschwingkreise unterschiedlicher Güte aufweisen;
- Figur 3: in einem Diagramm die Modulation des Sendesignals in einem ersten und einem zweiten Betriebszustand der quasistationären Sende- und Empfangseinheit;
- Figur 4: in einem Ablaufdiagramm das Verfahren zur Reduzierung des Stromverbrauchs einer Steuerschaltung, und
- Figur 5: in einem Ablaufdiagramm optionale Verfahrensschritte des Verfahrens gemäß Figur 4.

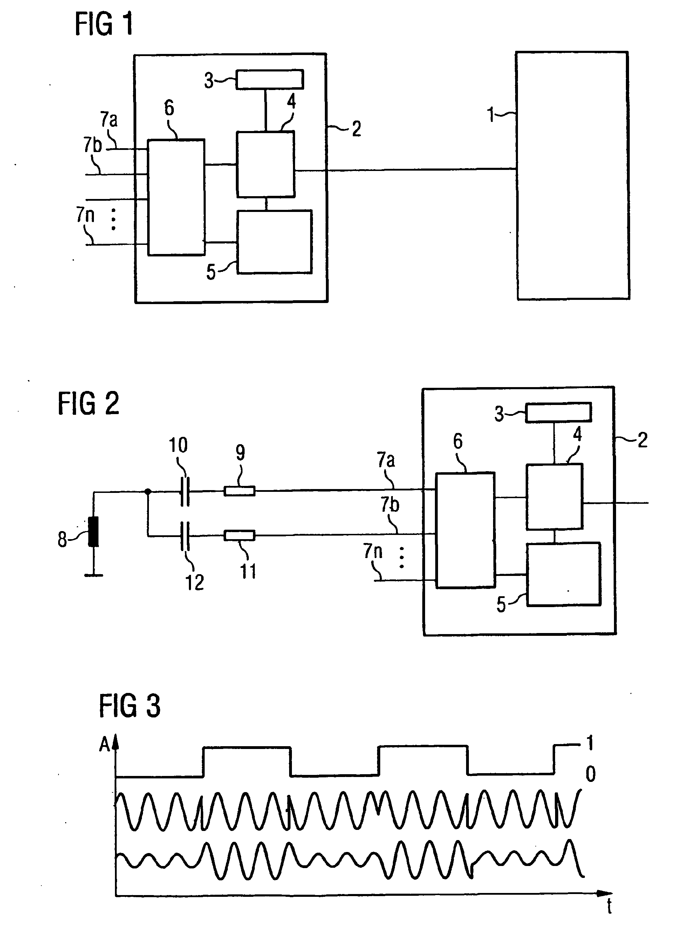

Figur 1 zeigt in einem Blockschaltbild eine Ausführungsform einer erfindungsgemäßen Anordnung zur Reduzierung des Stromverbrauchs einer Steuerschaltung, die einen Mikrocontroller 1 (oder ähnliche Steuereinrichtungen oder Mikroprozessoren) und eine Sende- und Empfangseinheit 2 zeigt. Die Sende- und Empfangseinheit 2 umfasst gemäß Figur 1 einen Timer 3, eine Steuereinheit 4, eine Stromüberwachungseinheit 5 und eine Antennenansteuereinheit 6 mit einer Vielzahl von Antennenausgängen 7a, 7b ... 7n zur Ansteuerung von Sendeantennen. Die Sendeantennen selbst sind dabei in Figur 1 nicht explizit dargestellt.

Der Timer 3 ist mit der Steuereinheit 4 verbunden, die wiederum mit der Stromüberwachungseinheit 5 und der Antennenansteuereinheit 6 verbunden ist. Die Stromüberwachungseinheit 5 ist ebenfalls mit der Antennenansteuereinheit 6 verbunden. Weiterhin ist gemäß Figur 1 der Mikrocontroller 1 mit der Sende- und Empfangseinheit 2 verbunden, wobei diese Verbindung zwischen dem Mikrocontroller 1 und der Steuereinheit 4 ausgeführt ist.

Die Anordnung weist zwei verschiedene Betriebszustände der Sende- und Empfangseinheit 2 auf. Im ersten Betriebszustand überträgt der Mikrocontroller 1 jedes Mal, wenn durch die Sende- und Empfangseinheit 2 ein Sendesignal ausgesandt werden soll, entsprechende Steuersignale an die Sende- und Empfangseinheit 2 beziehungsweise deren interne Steuereinheit 4. Die Steuereinheit 4 bewirkt daraufhin, dass die Antennenansteuereinheit 6 Sendesignale mit entsprechender Modulationsart an den Antennenausgängen 7a, 7b ... 7n zur Verfügung stellt.

Diese Sendesignale werden über in Figur 1 nicht gezeigte Sendeantennen abgestrahlt. Über die Steuersignale des Mikrocontrollers 1 werden dabei alle Merkmale festgelegt, die für das jeweilige Sendesignal und dessen Aufgabe notwendig sind. Diese können unter anderem Merkmale aufweisen wie zum Beispiel die Amplitude des Sendesignals, die zu sendende Information, die Modulationsart des Sendesignals und an welchen der Ausgänge 7a, 7b ... 7n der Antennenansteuereinheit 6 die Sendesignale bereitzustellen sind. Das Aussenden solcher Sendesignale dient bei einem schlüssellosen Zugangssystem für ein Fahrzeug beispielsweise der Feststellung des Vorhandenseins einer mobilen Sende- und Empfangseinheit im Wirkungsbereich der Sendeantennen. Dabei kann eine mobile Sende- und Empfangseinheit ein solches Sendesignal empfangen, wenn sie sich im Wirkungsbereich einer Sendeantenne befindet und beantwortet dieses üblicherweise sofort mit einem entsprechenden Antwortsignal.

Da die Feststellung des Vorhandenseins einer mobilen Sende- und Empfangseinheit im Wirkungsbereich der Sendeantennen eines Fahrzeugs üblicherweise fortlaufend erfolgen soll, werden über die Sendeantennen des Zugangssystems (zum Beispiel PASE-System) fortlaufend wiederholt in vorgegebenen Zeitabständen gleiche Sendesignale ausgesendet und die quasistationäre Sende- und Empfangseinheit horcht fortlaufend auf eingehende Antwortsignale einer mobilen Sende- und Empfangseinheit. Nach dem Stand der Technik werden die Sendesignale dabei üblicherweise in fest vorgegebenen Zeitabständen von zum Beispiel 500 ms ausgesendet.

Dieser Betrieb einer Steuerschaltung, in dem fortlaufend über einen längeren Zeitraum gleiche Sendesignale ausgesendet werden, wird häufig auch als Polling-Betrieb bezeichnet. Erst wenn ein Antwortsignal einer mobilen Sende- und Empfangseinheit empfangen wird, wird dieser Polling-Betrieb gegebenenfalls unterbrochen oder abgebrochen, um weitere nachfolgende Aktionen auszulösen oder Sendesignale mit anderen Merkmalen (übertragene Information, verwendete Sendeantennen, Signalamplitude, Modulationsart usw.) zu senden. Eine solche auf ein erstmalig empfangenes Antwortsignal einer mobilen Sende- und Empfangseinheit nachfolgende Aktion kann zum Beispiel das Entriegeln der Fahrzeugtüren sein, wenn das Antwortsignal von einer für den Zugang zum Fahrzeug berechtigten mobilen Sende- und Empfangseinheit empfangen wird.

Ein solcher Polling-Betrieb wird dabei beispielsweise ebenfalls als Reaktion auf das Auftreten eines bestimmten Ereignisses aktiviert. Ein solches Ereignis kann zum Beispiel sein, dass eine zum Zugangssystem des Fahrzeugs gehörige und von einem Benutzer mitgeführte mobile Sende- und Empfangseinheit den Wirkungsbereich der Sendeantennen des Zugangssystems verlässt. Als Folge davon kann zum Beispiel eine automatische Verriegelung der Fahrzeugtüren ausgelöst werden und das Zugangssystem wechselt in den beschriebenen Polling-Betrieb, um ein späteres erneutes Vorhandensein einer mobilen Sende- und Empfangseinheit festzustellen. Dieser Polling-Betrieb ist dabei so lange aktiv, so lange sich kein eine zum Zugang zum Fahrzeug berechtigte mobile Sende- und Empfangseinheit mitführender Benutzer dem Fahrzeug erneut nähert beziehungsweise sich in den Wirkungsbereich der im Polling-Betrieb betriebenen Sendeantennen bewegt.

Erfindungsgemäß kann die Anordnung gemäß Figur 1 zur Ausführung dieses Polling-Betriebs in einen zweiten Betriebszustand versetzt werden, der gegenüber dem ersten Betriebszustand vorteilhaft einen geringeren Stromverbrauch aufweist. Da im Polling-Betrieb fortlaufend gleiche Sendesignale beziehungsweise Sendesignale mit fest vorgegebenen Parametern ausgesendet werden, findet für diesen Fall zu Beginn des Polling-Betrieb erfindungsgemäß einmalig eine Übertragung von Konfigurationsdaten durch den Mikrocontroller 1 an die quasistationäre Sende- und Empfangseinheit 2 statt. Diese Konfigurationsdaten werden von der Steuereinheit 4 der quasistationären Sende- und Empfangseinheit 2 empfangen und diese wird dadurch für den weiteren Betrieb in den zweiten Betriebszustand versetzt. Dabei können auch in diesem zweiten Betriebszustand (Polling-Betrieb) über unterschiedliche Sendeantennen unterschiedliche Sendesignale ausgesandt werden, wo dies sinnvoll ist.

In diesem zweiten Betriebszustand sendet die quasistationäre Sende- und Empfangseinheit 2 ohne weitere nachfolgende Steuersignale oder Konfigurationsdaten des Mikrocontrollers selbständig wiederholt in fest vorgegebenen Zeitabständen Sendesignale über die Sendeantennen. Das Senden der Sendesignale über die Sendeantennen erfolgt dabei durch entsprechende Ansteuerung der Antennenansteuereinheit 6 durch die Steuereinheit 4 in Verbindung mit dem Timer 3. Die einmalig zu Beginn des Polling-Betrieb vom Mikrocontroller 1 empfangenen Konfigurationsdaten legen dabei zum Beispiel unter Verwendung des Timers 3 die Zeitabstände zwischen ausgesandten Sendesignalen sowie unter entsprechender Ansteuerung der Antennenansteuereinheit 6 durch die Steuereinheit 4 beispielsweise die für die Sendesignale verwendete Sendeleistung, Modulationsart und die jeweils zugeordneten Sendeantennen fest. Alternativ zu der oben beschriebenen Vorgehensweise kann der Sendevorgang auch in diesem zweiten Betriebszustand der quasistationären Sende- und Empfangseinheit 2 durch den Mikrocontroller 1 getriggert werden.

Erfindungsgemäß wechselt weiterhin der Mikrocontroller 1 sofort von seinem bisherigen aktiven Betriebsmodus in einen stromsparenden oder stromlosen inaktiven Betriebsmodus, nachdem er die quasistationäre Sende- und Empfangseinheit 2 in den zweiten Betriebszustand versetzt hat. Soll der Mikrocontroller (1), wie oben beschrieben, auch in diesem stromsparenden oder stromlosen inaktiven Betriebsmodus weiterhin das Senden der Sendesignale über die Sendeantennen triggern, kann dieser dazu beispielsweise zyklisch für kurze Zeitdauern aus seinem stromsparenden oder stromlosen inaktiven Betriebsmodus "aufgeweckt" werden. Dieser stromsparende oder stromlose inaktive Betriebsmodus des Mikrocontrollers 1 wird dabei so lange aufrechterhalten, bis der Polling-Betrieb (hier der zweite Betriebszustand der quasistationären Sende- und Empfangseinheit 2) aufgrund eines zweiten bestimmten Ereignisses abgebrochen wird. Ein solches Ereignis kann zum Beispiel die erneute Feststellung des Vorhandenseins einer mobilen Sende - und Empfangseinheit im Wirkungsbereich der Sendeantennen des schlüssellosen Zugangssystems sein.

In einem solchen Fall wechselt die quasistationäre Sende- und Empfangseinheit 2 sofort vom zweiten Betriebszustand zurück in den ersten Betriebszustand und erzeugt ein Zustandswechselsignal, das die Rückkehr des Mikrocontrollers 1 aus dem stromsparenden oder stromlosen inaktiven Betriebsmodus in den aktiven Betriebsmodus bewirkt. Nachfolgend kann der Mikrocontroller 1 wieder die Steuerung über die zu sendenden Sendesignale übernehmen, in dem er wieder entsprechende Steuersignale an die quasistationäre Sende- und Empfangseinheit 2 leitet, die sich jetzt wiederum im ersten Betriebszustand befindet.

Der im Polling-Betrieb somit verwendete stromsparende oder sogar stromlose inaktive Betriebsmodus des Mikrocontrollers 1 ermöglicht daher gegenüber dem Stand der Technik eine deutliche Reduzierung des Stromverbrauchs. Ein schlüsselloses Zugangssystem eines einmal verriegelten Fahrzeugs kann unter Umständen viele Stunden oder sogar mehrere Tage im beschriebenen Polling-Betrieb verbleiben (längerfristiges Parken), so dass sich eine Verminderung des Energieverbrauchs über solche längeren Zeiträume besonders positiv bemerkbar macht.

Figur 2 zeigt in einem Blockschaltbild eine erfindungsgemäße Anordnung der Sende- und Empfangseinheit mit Antennenausgängen mit Antennenschwingkreisen unterschiedlicher Güte und unterschiedlichem Stromverbrauch. Figur 2 umfasst wiederum die aus Figur 1 bekannte Sende- und Empfangseinheit 2 mit Timer 3, Steuereinheit 4, Stromüberwachungseinheit 5, Antennenansteuereinheit 6 und einer Vielzahl von Antennenausgängen 7a, 7b ... 7n zur Ansteuerung von Sendeantennen. Weiterhin umfasst Figur 2 eine hier als Induktivität dargestellte Antenne 8 sowie zwei Widerstände 9 und 11 und zwei Kondensatoren 10 und 12.

Gemäß Figur 2 ist die Sendeantenne 8 über eine Reihenschaltung aus dem Widerstand 9 und dem Kondensator 10 mit dem Ausgang 7a der Antennenansteuereinheit 6 der Sende- und Empfangseinheit 2 verbunden. Weiterhin ist die Sendeantenne 8 über eine Reihenschaltung aus dem Widerstand 11 und dem Kondensator 12 ebenfalls mit dem Ausgang 7b der Antennenansteuereinheit 6 der Sende- und Empfangseinheit 2 verbunden. In weiteren Ausführungsformen kann eine Sendeantenne dabei auch mit mehr als zwei Ausgängen 7a, 7b ... 7n der Antennenansteuereinheit 6 über entsprechende, in den Werten jeweils unterschiedliche Reihenschaltungen aus Widerständen und Kondensatoren verbunden sein.

Auf die in Figur 2 veranschaulichte Weise wird am Ausgang 7a der Antennenansteuereinheit 6 aus der Induktivität der Antenne 8, dem Widerstand 9 und dem Kondensator 10 ein erster Schwingkreis ausgebildet. Am Ausgang 7b der Antennenansteuereinheit 6 wird aus der Induktivität der Antenne 8, dem Widerstand 11 und dem Kondensator 12 ein zweiter Schwingkreis ausgebildet. Dabei sind die Werte für die Widerstände 9 und 11 und die Kondensatoren 10 und 12 so gewählt, dass sich der erste Schwingkreis und der zweite Schwingkreis hinsichtlich der Güte unterscheiden und daher bei gleichem Sendesignal an Ausgang 7a oder 7b auch einen unterschiedlichen Stromverbrauch aufweisen.

Das Sendesignal wird dabei wahlweise am Ausgang 7a oder am Ausgang 7b angelegt, das heißt es wird zu jedem Zeitpunkt immer nur ein Ausgang von mehreren mit einer Antenne verbundenen Ausgängen mit einem Sendesignal beaufschlagt. In einer weiteren Ausführungsform kann eine Antenne dabei auch mit mehr als zwei Ausgängen der Antennenansteuereinheit 6 über Reihenschaltungen aus Widerständen und Kondensatoren unterschiedliche Werte verbunden sein. Um den Stromverbrauch der Anordnung im zweiten Betriebszustand (Polling-Mode) gegenüber dem ersten Betriebszustand wie erwünscht weiter zu reduzieren, wird erfindungsgemäß ein Signalausgang 7a, 7b ... 7n der Antennenansteuereinheit 6 zum Senden der Sendesignale gewählt, der einen Antennenschwingkreis mit geringerem Stromverbrauch oder den Antennenschwingkreis mit dem den geringsten Stromverbrauch aufweist.

Diese Auswahl kann dabei zum Beispiel davon abhängig sein, welche Reichweite mit dem ausgesendeten Sendesignal erreicht werden soll beziehungsweise welche Bandbreite für das Sendesignal zur Verfügung stehen muss. Dabei kann mit Hilfe der Stromüberwachungseinheit 5 festgestellt werden, welche Auswahl sich in Hinsicht auf einen geringen Stromverbrauch positiv oder am positivsten auswirkt. So kann zum Beispiel durch die Auswahl eines Signalpfades mit hoher Güte des Schwingkreises im zweiten Betriebszustand der Sende- und Empfangseinheit 2 zunächst die Reichweite für das Sendesignal erhöht werden. Gleichzeitig kann dann bei Beibehaltung gleicher Reichweite wie im ersten Betriebszustand der Sende- und Empfangseinheit 2 die Sendeleistung der Sendesignale und damit der Stromverbrauch der Sende- und Empfangseinheit 2 reduziert werden.

Eine weitere Möglichkeit zur Reduzierung des Stromverbrauchs der Anordnung gemäß Figur 1 besteht erfindungsgemäß darin, gegenüber dem ersten Betriebszustand der Sende- und Empfangseinheit in deren zweiten Betriebszustand die Modulationsart für ein Sendesignal zu verändern. Dies kann sich vorteilhaft auswirken, da unterschiedliche Modulationsarten einen unterschiedlichen Stromverbrauch aufweisen und im zweiten Betriebszustand (Polling-Mode) der Sende- und Empfangseinheit eine entsprechend stromsparende Modulationsart ausgewählt werden kann. Als Beispiele für solche unterschiedlichen Modulationsarten werden hier die PSK-Modulation (PSK: Phase Shift Keying) und die ASK-Modulation (ASK: Amplitude Shift Keying) betrachtet. Beide Modulationsarten sind bei der drahtlosen Übertragung von Signalen häufig eingesetzte Modulationsverfahren. Dabei wird im ersten Betriebszustand der Sende- und Empfangseinheit 2 gemäß Figur 1 beispielsweise die PSK-Modulation der Sendesignale verwendet.

Bei der PSK-Modulation wird ein digitaler Datenstrom aus den Werten "0" und "1" in ein sinusförmiges Trägersignal umgesetzt, dessen Phasenlage sich für die unterschiedlichen digitalen Daten unterscheidet. Im Falle eines binären Datensignals mit Werten "0" und "1" unterscheidet sich die Phasenlage der PSK-modulierten Signalanteile beispielsweise um 180°. Die Signalamplitude des Trägersignals ist bei der PSK-Modulation für alle Phasenlagen gleich. Ein einfaches Beispiel für die PSK-Modulation und die ASK-Modulation ist aus Figur 3 zu ersehen.

Figur 3 zeigt den zeitlichen Verlauf der Amplitude A (Ordinate) von Signalen über der Zeit t (Abszisse). Das in Figur 3 oben dargestellte Signal zeigt einen vereinfachten digitalen Datenstrom mit fortlaufendem Wechsel zwischen Datenwerten "0" und "1". In Figur 3 in der Mitte dargestellt ist der zeitliche Verlauf eines zugehörigen PSK-modulierten Signals, das sich aus dem in Figur 3 oben dargestellten Datenstrom ergibt. Daraus ist die für einen Datenwert "1" um 180° gegenüber einem Datenwert "0" versetzte Phasenlage des Signals bei gleicher Trägersignalamplitude zu ersehen.

Weiterhin zeigt Figur 3 unten dargestellt den Signalverlauf eines ASK-modulierten Signals. Bei der ASK-Modulation wird ein wiederum sinusförmiges Trägersignal entsprechend den Datenwerten "0" und "1" im digitalen Datenstrom in der Amplitude moduliert. Aus Figur 3 ist zu ersehen, dass die Amplitude des Sendesignals dabei für Datenwerte "0" kleiner ausgeführt ist als für Datenwerte "1" (vergleiche Signalverlauf oben mit Signalverlauf unten gemäß Figur 3). Dies bedeutet, dass ein ASK-moduliertes Sendesignal bei gleichem digitalem Eingangsdatenstrom und gleicher Maximalamplitude des Trägersignals im Mittel eine geringere Sendeleistung aufweist als ein PSKmoduliertes Sendesignal. Daher reduziert sich der Stromverbrauch für ein ASK-moduliertes Sendesignal gegenüber einem PSK-modulierten Sendesignal.

Erfindungsgemäß wird im zweiten Betriebszustand der Sende - und Empfangseinheit 2 gemäß Figur 1 und 2 zum Beispiel eine solche ASK-Modulation für die Sendesignale verwendet, um die erwünschte Reduzierung des Stromverbrauchs gegenüber der Verwendung der PSK-Modulation im ersten Betriebszustand der Sende- und Empfangseinheit 2 zu erzielen. Wechselt die Sende- und Empfangseinheit 2 wieder in den ersten Betriebszustand, kehrt die Anordnung gemäß Figur 1 und 2 wieder zur PSK-Modulation zurück. Der Vergleich zwischen PSK- und ASK-Modulation dient dabei nur der Veranschaulichung. Im zweiten Betriebszustand der Sende- und Empfangseinheit 2 können auch andere Modulationsarten vorteilhaft eingesetzt werden, die zu einer Reduzierung des Stromverbrauchs gegenüber dem ersten Betriebszustand führen.

Die angegebenen Maßnahmen zur Reduzierung des Stromverbrauchs im zweiten Betriebszustand der Sende- und Empfangseinheit, die den Mikrocontroller 1, die Schwingkreisgüte des Signalpfads zur Sendeantenne sowie die Modulationsart betreffen, sind voneinander unabhängig und können wahlweise einzeln für sich oder in beliebigen Kombinationen angewendet werden.

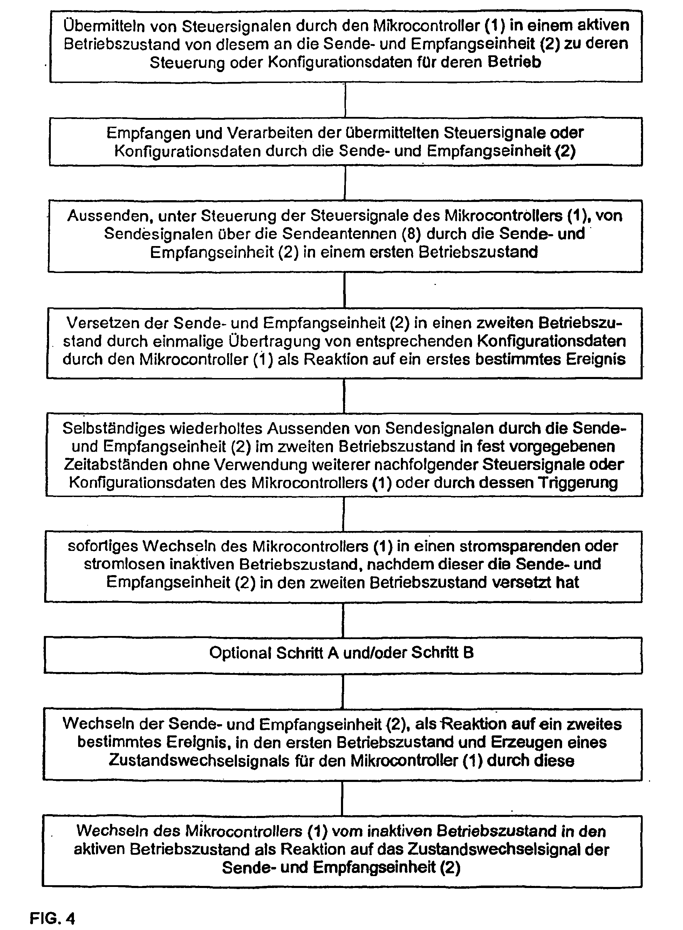

Figur 4 zeigt in einem Ablaufdiagramm eine beispielhafte Ausführungsform der Verfahrensschritte zur Reduzierung des Stromverbrauchs einer Steuerschaltung. Das in Figur 4 gezeigte Verfahren bezieht sich dabei auf die in der Figur 1 gezeigte beispielhafte Ausführungsform. Gemäß Figur 4 weist ein erster Verfahrensschritt das Übermitteln von Steuersignalen durch den Mikrocontroller 1 in einem aktiven Betriebszustand von diesem an die Sende- und Empfangseinheit 2 zu deren Steuerung oder Konfigurationsdaten für deren Betrieb auf. Ein zweiter Verfahrensschritt weist Empfangen und Verarbeiten der übermittelten Steuersignale oder Konfigurationsdaten durch die Sende- und Empfangseinheit 2 auf. Ein dritter Verfahrensschritt weist das Aussenden, unter Steuerung der Steuersignale des Mikrocontrollers 1, von Sendesignalen über die Sendeantennen 8 durch die Sende- und Empfangseinheit 2 in einem ersten Betriebszustand von dieser auf.

Ein vierter Verfahrensschritt weist das Versetzen der Sende- und Empfangseinheit 2 in einen zweiten Betriebszustand durch einmalige Übertragung von entsprechenden Konfigurationsdaten durch den Mikrocontroller 1 als Reaktion auf ein erstes bestimmtes Ereignis auf. Ein fünfter Verfahrensschritt weist das selbständige wiederholtes Aussenden von Sendesignalen durch die Sende- und Empfangseinheit 2 im zweiten Betriebszustand in fest vorgegebenen Zeitabständen ohne Verwendung weiterer nachfolgender Steuersignale oder Konfigurationsdaten des Mikrocontrollers 1 auf.

Ein sechster Verfahrensschritt weist das sofortige Wechseln des Mikrocontrollers 1 in einen stromsparenden oder stromlosen inaktiven Betriebszustand auf, nachdem dieser die Sende- und Empfangseinheit 2 in den zweiten Betriebszustand versetzt hat. Ein siebter Verfahrensschritt weist optional den zusätzlichen Verfahrensschritt A oder B oder beide Verfahrensschritte A und B auf. Ist keiner der beiden optionalen Verfahrensschritte A und/oder B erwünscht, fährt das Verfahren gemäß Figur 4 im Anschluss an den sechsten Verfahrensschritt mit dem achten Verfahrensschritt fort.

Ein achter Verfahrensschritt weist als Reaktion auf ein zweites bestimmtes Ereignis das Wechseln der Sende- und Empfangseinheit 2 in den ersten Betriebszustand und das Erzeugen eines Zustandswechselsignals für den Mikrocontroller 1 durch die Sende- und Empfangseinheit 2 auf. Ein neunter Verfahrensschritt weist als Reaktion auf das Zustandswechselsignal der Sende- und Empfangseinheit 2 das Wechseln des Mikrocontrollers 1 vom inaktiven Betriebszustand in den aktiven Betriebszustand auf.

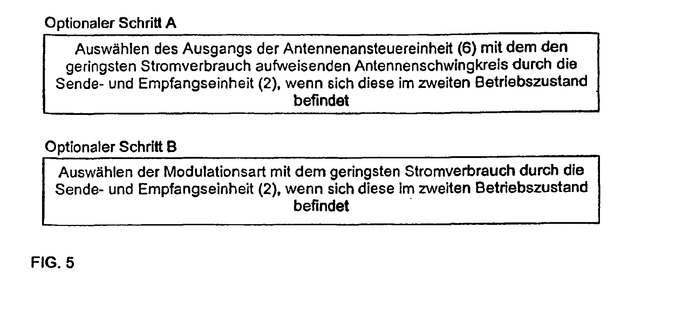

Optional kann das Verfahren gemäß Figur 4 zusätzlich einen oder beide der nachfolgend ausgeführten, in Figur 5 dargestellten Verfahrensschritte A und/oder B umfassen:

Gemäß Figur 5 weist der optionale Verfahrensschritt A das Auswählen des Ausgangs der Antennenansteuereinheit (6) mit dem den geringsten Stromverbrauch aufweisenden Antennenschwingkreis durch die Sende- und Empfangseinheit (2) auf, wenn sich diese im zweiten Betriebszustand befindet (siehe Figur 2).

Gemäß Figur 5 weist der optionale Verfahrensschritt B das Auswählen der Modulationsart für die Sendesignale mit dem geringsten Stromverbrauch durch die Sende- und Empfangseinheit (2) auf, wenn sich diese im zweiten Betriebszustand befindet (siehe Figur 3).

### Bezugszeichenliste

- 1: Mikrocontroller
- 2: Sende- und Empfangseinheit
- 3: Timer
- 4: Steuereinheit
- 5: Stromüberwachungseinheit
- 6: Antennenansteuereinheit
- 7a-n: Ausgänge der Antennenansteuereinheit
- 8: Sendeantenne
- 9: Widerstand
- 10: Kondensator
- 11: Widerstand
- 12: Kondensator

## Patentansprüche

1. Anordnung zur Reduzierung des Stromverbrauchs einer Steuerschaltung, mit
einem Mikrocontroller (1) und einer elektrisch mit dem Mikrocontroller (1) verbundenen Sende- und Empfangseinheit (2) mit mindestens einer Sendeantenne (8) zum drahtlosen Senden von Signalen,
bei der der Mikrocontroller (1) dazu ausgebildet ist, in einem aktiven Betriebszustand elektrisch an die Sende- und Empfangseinheit (2) Steuersignale zu deren Steuerung oder Konfigurationsdaten für deren Betrieb zu übermitteln,
der Mikrocontroller (1) dazu ausgebildet ist, die Sende- und Empfangseinheit (2) als Reaktion auf ein erstes bestimmtes Ereignis durch einmalige Übertragung von entsprechenden Konfigurationsdaten in einen zweiten Betriebszustand zu versetzen,
der Mikrocontroller (1) dazu ausgebildet ist, sofort in einen stromsparenden oder stromlosen inaktiven Betriebszustand zu wechseln, nachdem er die Sende- und Empfangseinheit (2) in den zweiten Betriebszustand versetzt hat,
der Mikrocontroller (1) dazu ausgebildet ist, als Reaktion auf ein Zustandswechselsignal der Sende- und Empfangseinheit (2) vom inaktiven Betriebszustand in den aktiven Betriebszustand zu wechseln,
die Sende- und Empfangseinheit (2) dazu ausgebildet ist, elektrisch übermittelte Steuersignale oder Konfigurationsdaten des Mikrocontrollers (1) zu empfangen und zu verarbeiten,
die Sende- und Empfangseinheit (2) dazu ausgebildet ist, in einem ersten Betriebszustand unter Steuerung der Steuersignale des Mikrocontrollers (1) Sendesignale über die Sendeantenne (8) auszusenden,
die Sende- und Empfangseinheit (2) dazu ausgebildet ist, im zweiten Betriebszustand ohne weitere nachfolgende Steuersignale oder Konfigurationsdaten des Mikrocontrollers (1) selbständig wiederholt oder durch den Mikrocontroller (1) getriggert in fest vorgegebenen Zeitabständen Sendesignale über die Sendeantenne (8) auszusenden, und
die Sende- und Empfangseinheit (2) dazu ausgebildet ist, als Reaktion auf ein zweites bestimmtes Ereignis in den ersten Betriebszustand zu wechseln und das Zustandswechselsignal für den Mikrocontroller (1) zu erzeugen.

2. Anordnung nach Anspruch 1, mit
einer Antennenansteuereinheit (6) mit mindestens zwei Ausgängen (7a, 7b ... 7n) zur Ansteuerung von Sendeantennen (8),
mindestens zwei an jeweils einen eigenen Signalausgang der Antennenansteuereinheit (6) angeschlossenen und mit mindestens einer Sendeantenne (8) gleichzeitig verbundenen Antennenschwingkreisen unterschiedlicher Güte und unterschiedlichen Stromverbrauchs,
bei der die Sende- und Empfangseinheit (2) dazu ausgebildet ist, Sendesignale wahlweise über einen der mindestens zwei Ausgänge (7a, 7b ... 7n) der Antennenansteuereinheit (6) zu senden.

3. Anordnung nach Anspruch 2, bei der die Sende- und Empfangseinheit (2) dazu ausgebildet ist, einen Ausgang der Antennenansteuereinheit (6) mit einem einen geringeren Stromverbrauch aufweisenden Antennenschwingkreis oder den Ausgang der Antennenansteuereinheit (6) mit dem den geringsten Stromverbrauch aufweisenden Antennenschwingkreis auszuwählen, wenn sich die Sende- und Empfangseinheit (2) im zweiten Betriebszustand befindet.

4. Anordnung nach Anspruch 1 bis 3, bei der die Sende- und Empfangseinheit (2) dazu ausgebildet ist, die Ausgänge (7a, 7b ... 7n) der Antennenansteuereinheit (6) zum Aussenden der Sendesignale zwischen mindestens zwei Betriebsarten der Antennenansteuereinheit (6) mit unterschiedlichen Modulationsarten für die Sendesignale umzuschalten, die unterschiedlichen Stromverbrauch aufweisen.

5. Anordnung nach Anspruch 4, bei der die Sende- und Empfangseinheit (2) dazu ausgebildet ist, eine Modulationsart mit einem geringeren Stromverbrauch oder die Modulationsart mit dem geringsten Stromverbrauch auszuwählen, wenn sich die Sende- und Empfangseinheit (2) im zweiten Betriebszustand befindet.

6. Anordnung nach Anspruch 4 und 5, bei der die Modulationsart im ersten Betriebszustand eine PSK-Modulation ist und die die Modulationsart im zweiten Betriebszustand eine ASK-Modulation ist.

7. Anordnung nach Anspruch 1 bis 6, bei der das erste bestimmte Ereignis das Verriegeln der Fahrzeugtüren eines Fahrzeugs ist.

8. Anordnung nach Anspruch 1 bis 7, bei der die vorgegebenen Zeitabstände zum selbständigen wiederholten Aussenden der Sendesignale im zweiten Betriebszustand der Sende- und Empfangseinheit (2) im Bereich von 100 ms bis 2000 ms liegen.

9. Anordnung nach Anspruch 1 bis 8, bei der das zweite bestimmte Ereignis das Empfangen eines Antwortsignals einer mobilen Sende- und Empfangseinheit ist, das diese als Reaktion auf ein empfangenes der Sendesignale aussendet.

10. Verfahren zur Reduzierung des Stromverbrauchs einer Steuerschaltung, bei dem mindestens eine elektrisch mit einem Mikrocontroller (1) verbundene Sende- und Empfangseinheit (2) über mindestens eine Sendeantenne (8) drahtlos Signale sendet, wobei das Verfahren folgende Schritte umfasst:
Übermitteln, durch den Mikrocontroller (1) in einem aktiven Betriebszustand von diesem, von Steuersignalen an die Sende- und Empfangseinheit (2) zu deren Steuerung oder von Konfigurationsdaten für deren Betrieb,
Empfangen und Verarbeiten der übermittelten Steuersignale oder Konfigurationsdaten durch die Sende- und Empfangseinheit (2),
Aussenden, unter Steuerung der Steuersignale des Mikrocontrollers (1), von Sendesignalen über die Sendeantennen (8) durch die Sende- und Empfangseinheit (2) in einem ersten Betriebszustand,
Versetzen der Sende- und Empfangseinheit (2) in einen zweiten Betriebszustand durch einmalige Übertragung von entsprechenden Konfigurationsdaten durch den Mikrocontroller (1) als Reaktion auf ein erstes bestimmtes Ereignis,
im zweiten Betriebszustand selbständiges wiederholtes Aussenden von Sendesignalen in fest vorgegebenen Zeitabständen über die Sendeantennen (8) durch die Sende- und Empfangseinheit (2) ohne weitere nachfolgende Steuersignale oder Konfigurationsdaten des Mikrocontrollers (1) oder durch den Mikrocontroller (1) getriggert,
sofortiges Wechseln des Mikrocontrollers (1) in einen stromsparenden oder stromlosen inaktiven Betriebszustand, nachdem dieser die Sende- und Empfangseinheit (2) in den zweiten Betriebszustand versetzt hat,
Wechseln der Sende- und Empfangseinheit (2), als Reaktion auf ein zweites bestimmtes Ereignis, in den ersten Betriebszustand und Erzeugen eines Zustandswechselsignals für den Mikrocontroller (1) durch diese, und
Wechseln des Mikrocontrollers (1) vom inaktiven Betriebszustand in den aktiven Betriebszustand als Reaktion auf das Zustandswechselsignal der Sende- und Empfangseinheit (2).

11. Verfahren nach Anspruch 10, bei dem die Sende- und Empfangseinheit (2) Sendesignale wahlweise über einen von Ausgängen (7a, 7b ... 7n) einer Antennenansteuereinheit (6) sendet, die über Antennenschwingkreise jeweils unterschiedlicher Güte und unterschiedlichen Stromverbrauchs mit mindestens einer Sendeantenne (8) gleichzeitig verbundenen sind, wobei das Verfahren folgende Schritte umfasst:
Auswählen des Ausgangs der Antennenansteuereinheit (6) mit dem den geringsten Stromverbrauch aufweisenden Antennenschwingkreis durch die Sende- und Empfangseinheit (2), wenn sich diese im zweiten Betriebszustand befindet.

12. Verfahren nach Anspruch 10 und 11, bei dem die Sende- und Empfangseinheit (2) die Ausgänge (7a, 7b ... 7n) der Antennenansteuereinheit (6) zum Aussenden der Sendesignale zwischen mindestens zwei Betriebsarten mit unterschiedlichen Modulationsarten für die Sendesignale umschaltet, die unterschiedlichen Stromverbrauch aufweisen, wobei das Verfahren folgende Schritte umfasst:
Auswählen der Modulationsart mit dem geringsten Stromverbrauch durch die Sende- und Empfangseinheit (2), wenn sich diese im zweiten Betriebszustand befindet.

## Claims

1. Apparatus for reducing the current consumption of a control circuit, with
a microcontroller (1) and a transmitting and receiving unit (2) electrically connected to the microcontroller (1) with at least one transmit antenna (8) for wireless transmission of signals,
in which the microcontroller (1) is embodied, in an active operating state, to transfer electrically to the transmitting and receiving unit (2) control signals for its control or configuration data for its operation,
the microcontroller (1) is embodied to put the transmitting and receiving unit (2) into a second operating state as a reaction to a first specific event by one-off transmission of corresponding configuration data,
the microcontroller (1) is embodied to switch immediately into a current-saving or zero-current inactive operating state after it has put the transmitting and receiving unit (2) into the second operating state,
the microcontroller (1) is embodied to switch from the inactive operating state into the active operating state as a reaction to a state transition signal of the transmitting and receiving unit (2).
the transmitting and receiving unit (2) is embodied to receive and to process electrically transferred control signals or configuration data of the microcontroller (1),
the transmitting and receiving unit (2) is embodied to send out transmit signals via the transmit antenna (8) in a first operating state under the control of the control signals of the microcontroller (1),
the transmitting and receiving unit (2) is embodied, in the second operating state, without further subsequent control signals or configuration data of the microcontroller (1), to send out transmit signals via the transmit antenna (8) independently repeatedly or triggered by the microcontroller (1) at fixed predetermined intervals, and
the transmitting and receiving unit (2) is embodied, as a reaction to a second event determined, to switch into the first operating state and to create the state change signal for the microcontroller (1).

2. Apparatus according to claim 1, with
an antenna activation unit (6) with at least two outputs (7a, 7b ... 7n) for activation of transmit antennas (8),
at least two antenna resonant circuits each connected to a separate signal output of the antenna activation unit (6) and simultaneously connected to at least one transmit antenna (8) of different quality and different current consumption,
in which the transmitting and receiving unit (2) is embodied to optionally send transmit signals via one of the at least two outputs (7a, 7b ... 7n) of the antenna activation unit (6) .

3. Apparatus according to claim 2, in which the transmitting and receiving unit (2) is embodied to select an output of the antenna activation unit (6) with an antenna resonant circuit having a low current consumption or the output of the antenna activation unit (6) with the antenna resonant circuit having the lowest current consumption if the transmitting and receiving unit (2) is in the second operating state.

4. Apparatus according to claim 1 to 3, in which the transmitting and receiving unit (2) is embodied to switch the outputs (7a, 7b ... 7n) of the antenna activation unit (6) for sending out the transmit signals between at least two operating modes of the antenna activation unit (6) with different modulation types for the transmit signals which have different current consumption.

5. Apparatus according to claim 4, in which the transmitting and receiving unit (2) is embodied to select a modulation type with a low current consumption or the modulation type with the lowest current consumption if the transmitting and receiving unit (2) is in the second operating state.

6. Apparatus according to claim 4 and 5, in which the modulation type in the first operating state is a PSK modulation and the modulation type in the second operating state is an ASK modulation.

7. Apparatus according to claim 1 to 6, in which the first event determined is the locking of the doors of the vehicle.

8. Apparatus according to claim 1 to 7, in which the predetermined intervals for independent repeated sending out of the transmit signals in the second operating state of the transmitting and receiving unit (2) lie in the range between 100 ms and 2000 ms.

9. Apparatus according to claim 1 to 8, in which the second event determined is the receipt of an answer signal of a mobile transmitting and receiving unit which sends out this signal as a reaction to receiving the transmit signals.

10. Method for reducing the current consumption of a control circuit in which at least one transmitting and receiving unit (2) connected electrically to a microcontroller, sends signals wirelessly via at least one transmit antenna (8), with the method including the following steps:
transfer by the microcontroller (1), in an active operating state of the latter, of control signals to the transmitting and receiving unit (2) for its control or of configuration data for its operation,
receipt and processing of the transferred control signals or configuration data by the transmitting and receiving unit (2),
sending out, under the control of the control signals of the microcontroller (1), of transmit signals via the transmit antennas (8) by the transmitting and receiving unit (2) in a first operating state,
putting the transmitting and receiving unit (2) into a second operating state by one-off transmission of corresponding configuration data by the microcontroller (1) as a reaction to a first specific event,
in the second operating state, independent repeated sending out of transmit signals at fixed predetermined intervals via the transmit antennas (8) by the transmitting and receiving unit (2) without further subsequent control signals or configuration data of the microcontroller (1) or triggered by the microcontroller (1),
immediate switching of the microcontroller (1) into a current-saving or zero-current inactive operating state after the latter has put the transmitting and receiving unit (2) into the second operating state,
switching the transmitting and receiving unit (2), as a reaction to a second specific event, into the first operating state and generation of a state change signal for the microcontroller (1) by the latter, and
switching the microcontroller (1) from the inactive operating state into the active operating state as a reaction to the state change signal of the transmitting and receiving unit (2).

11. Method according to claim 10, in which the transmitting and receiving unit (2) optionally sends out transmit signals via one of the outputs (7a, 7b ... 7n) of an antenna activation unit (6) which are simultaneously connected via antenna resonant circuits of different respective qualities and different current consumptions to at least one transmit antenna (8), with the method comprising the following steps:
selection by the transmitting and receiving unit (2) of the output of the antenna activation unit (6) with the antenna resonant circuit having the lowest current consumption, if said unit is in the second operating state.

12. Method according to claim 10 and 11, in which the transmitting and receiving unit (2) switches the outputs (7a, 7b ... 7n) of the antenna activation unit (6) for sending out the transmit signals between at least two operating modes with different modulation types for the transmit signals which have different current consumption, with the method comprising the following steps:
selection of the modulation type with the lowest current consumption by the transmitting and receiving unit (2) when the latter is in the second operating state.

## Revendications

1. Agencement pour réduire la consommation de courant d'un circuit de commande, comprenant :
un microcontrôleur (1) et une unité d'émission et de réception (2) électriquement reliée au microcontrôleur (1) avec au moins une antenne d'émission (8) pour l'émission sans fil de signaux,
dans lequel le microcontrôleur (1) est conformé pour, dans un état de fonctionnement actif, transmettre électriquement à l'unité d'émission et de réception (2) des signaux de commande relatifs à sa commande ou à ses données de configuration pour assurer son fonctionnement,
le microcontrôleur (1) est conformé pour placer l'unité d'émission et de réception (2) dans un second état de fonctionnement en réaction à un premier événement déterminé par une transmission unique de données de configuration correspondantes,
le microcontrôleur (1) est conformé pour passer immédiatement à un état de fonctionnement inactif économiseur de courant ou sans courant suite au placement de l'unité d'émission et de réception (2) dans le second état de fonctionnement,
le microcontrôleur (1) est conformé pour passer de l'état de fonctionnement inactif à l'état de fonctionnement actif en réaction à un signal de changement d'état de l'unité d'émission et de réception (2),
l'unité d'émission et de réception (2) est conformée pour recevoir et traiter des signaux de commande ou des données de configuration du microcontrôleur (1) transmis(es) électriquement,
l'unité d'émission et de réception (2) est conformée pour émettre des signaux d'émission via l'antenne d'émission (8) dans un premier état de fonctionnement et sous commande des signaux de commande du microcontrôleur (1),
l'unité d'émission et de réception (2) est conformée pour émettre des signaux d'émission à intervalles de temps prédéfinis de façon fixe, via l'antenne d'émission (8), dans le second état de fonctionnement, sans que d'autres signaux de commande supplémentaires ou des données de configuration du microcontrôleur (1) soient indépendamment répété(e)s ou déclenché(e)s par le microcontrôleur (1), et
l'unité d'émission et de réception (2) est conformée pour passer au premier état de fonctionnement en réaction à un second événement déterminé et pour générer le signal de changement d'état pour le microcontrôleur (1).

2. Agencement selon la revendication 1, comprenant :
une unité de pilotage d'antenne (6) avec au moins deux sorties (7a, 7b, ..., 7n) pour le pilotage d'antennes d'émission (8),
au moins deux circuits oscillants d'antenne, de qualité différente et de consommation de courant différente, branchés respectivement à une sortie de signal spécifique de l'unité de pilotage d'antenne (6) et reliés en même temps à au moins une antenne d'émission (8),
dans lequel l'unité d'émission et de réception (2) est conformée pour envoyer des signaux d'émission choisis via une des au moins deux sorties (7a, 7b, ..., 7n) de l'unité de pilotage d'antenne (6).

3. Agencement selon la revendication 2, dans lequel l'unité d'émission et de réception (2) est conformée pour choisir une sortie de l'unité de pilotage d'antenne (6) avec un circuit oscillant d'antenne présentant une consommation de courant réduite ou la sortie de l'unité de pilotage d'antenne (6) avec le circuit oscillant d'antenne présentant la consommation de courant la plus réduite lorsque l'unité d'émission et de réception (2) se trouve dans le second état de fonctionnement.

4. Agencement selon les revendications 1 à 3, dans lequel l'unité d'émission et de réception (2) est conformée pour commuter les sorties (7a, 7b, ..., 7n) de l'unité de pilotage d'antenne (6) afin d'émettre des signaux d'émission entre au moins deux modes de fonctionnement de l'unité de pilotage d'antenne (6) avec des types de modulation différents pour les signaux d'émission, qui présentent une consommation de courant différente.

5. Agencement selon la revendication 4, dans lequel l'unité d'émission et de réception (2) est conformée pour choisir un type de modulation avec une consommation de courant réduite ou le type de modulation avec la consommation de courant la plus réduite lorsque l'unité d'émission et de réception (2) se trouve dans le second état de fonctionnement.

6. Agencement selon les revendications 4 et 5, dans lequel le type de modulation dans le premier état de fonctionnement est une modulation PSK et le type de modulation dans le second état de fonctionnement est une modulation ASK.

7. Agencement selon les revendications 1 à 6, dans lequel le premier événement déterminé est le verrouillage des portes d'un véhicule.

8. Agencement selon les revendications 1 à 7, dans lequel les intervalles de temps prédéfinis pour l'émission indépendante et répétée des signaux d'émission dans le second état de fonctionnement de l'unité d'émission et de réception (2) se situent dans la plage allant de 100 ms à 2 000 ms.

9. Agencement selon les revendications 1 à 8, dans lequel le second événement déterminé est la réception d'un signal de réponse d'une unité d'émission et de réception mobile, qui émet celui-ci en réaction à un signal d'émission reçu des signaux d'émission.

10. Procédé pour réduire la consommation de courant d'un circuit de commande, dans lequel au moins une unité d'émission et de réception (2) électriquement relié à un microcontrôleur (1) envoie des signaux sans fil via au moins une antenne d'émission (8), dans lequel le procédé comprend les étapes suivantes :
transmission par le microcontrôleur (1), dans un état de fonctionnement actif de celui-ci, à l'unité d'émission et de réception (2) de signaux de commande relatifs à sa commande ou de données de configuration pour assurer son fonctionnement,
réception et traitement des signaux de commande ou des données de configuration transmis(e)s par l'unité d'émission et de réception (2),
émission, sous commande des signaux de commande du microcontrôleur (1), de signaux d'émission via les antennes d'émission (8) par l'unité d'émission et de réception (2) dans un premier état de fonctionnement,
placement de l'unité d'émission et de réception (2) dans un second état de fonctionnement par une transmission unique de données de configuration correspondantes par le microcontrôleur (1) en réaction à un premier événement déterminé,
émission de manière indépendante et répétée, dans le second état de fonctionnement, de signaux d'émission à intervalles de temps prédéfinis de façon fixe via les antennes d'émission (8) par l'unité d'émission et de réception (2) sans autres signaux de commande supplémentaires ou données de configuration du microcontrôleur (1) ou déclenché(e)s par le microcontrôleur (1),
passage immédiat du microcontrôleur (1) à un état de fonctionnement inactif économiseur de courant ou sans courant suite au placement par celui-ci de l'unité d'émission et de réception (2) dans le second état de fonctionnement,
passage de l'unité d'émission et de réception (2), en réaction à un second événement déterminé, au premier état de fonctionnement, et génération par celle-ci d'un signal de changement d'état pour le microcontrôleur (1), et
passage du microcontrôleur (1) de l'état de fonctionnement inactif à l'état de fonctionnement actif en réaction au signal de changement d'état de l'unité d'émission et de réception (2).

11. Procédé selon la revendication 10, dans lequel l'unité d'émission et de réception (2) envoie des signaux d'émission choisis via l'une des sorties (7a, 7b, ..., 7n) d'une unité de pilotage d'antenne (6), qui sont reliés en même temps à au moins une antenne d'émission (8), via des circuits oscillants d'antenne respectivement de qualité différente et de consommation de courant différente, dans lequel le procédé comprend les étapes suivantes :
choix de la sortie de l'unité de pilotage d'antenne (6) avec le circuit oscillant présentant la consommation de courant la plus réduite par l'unité d'émission et de réception (2) lorsque celle-ci se trouve dans le second état de fonctionnement.

12. Procédé selon les revendications 10 et 11, dans lequel l'unité d'émission et de réception (2) commute les sorties (7a, 7b, ..., 7n) de l'unité de pilotage d'antenne (6) afin d'émettre les signaux d'émission entre au moins deux modes de fonctionnement avec des types de modulation différents pour les signaux d'émission, qui présentent une consommation de courant différente, dans lequel le procédé comprend les étapes suivantes :
choix du type de modulation avec la consommation de courant la plus réduite par l'unité d'émission et de réception (2) lorsque celle-ci se trouve dans le second état de fonctionnement.
